# EUROPEAN PATENT SPECIFICATION

(11) **EP 0 945 603 B1**
(45) Date of publication and mention of the grant of the patent: **01.06.2005**
(21) Application number: 99105780.3
(22) Date of filing: 22.03.1999
(51) Int. Cl.: F02B 23/10, F02F 3/26

(54) **Internal combustion engine and piston thereof**
Brennkraftmaschine und ihre Kolben
Moteur à combustion interne et son piston

(30) Priority: 23.03.1998 JP 9397298
(43) Date of publication of application: 29.09.1999
(73) Proprietor: YAMAHA HATSUDOKI KABUSHIKI KAISHA, Iwata-shi Shizuoka-ken, 438 (JP)
(72) Inventor: Suzuki, Yuichi, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- EP-A- 0 558 072
- EP-A- 0 694 682
- JP-A- 4 166 612
- JP-A- 5 010 134
- US-A- 5 115 774
- US-A- 5 327 864
- US-A- 5 709 190

## Description

This invention relates to an internal combustion engine according to the preamble of claim 1.

In such a conventional direct injection type internal combustion engine as is known e.g. from US 5,115,774, fuel is directly injected into a combustion chamber, defined by a cylinder bore and a piston top, diagonally towards the top surface of the piston. This fuel is combusted by igniting it with a spark plug located at the top wall of the combustion chamber. By the conventional configuration, smoke and HC emissions can be kept down by achieving a good air mixture when the injection angle of the spray in fuel is large, however, the sprayed fuel is insufficiently transferred to spark the plug. Moreover, problems may arise in that the mixing with air becomes insufficient so that smoke and HC emissions are liable to occur.

Besides, JP 5-10134 presents a configuration of a piston for an internal combustion engine, wherein the more pointed end of said cavity is directed towards said spark plug. Further embodiments of piston tops are known from JP 05010134 A and EP 0 558 072 A1.

It is an objective of the invention to present an internal combustion engine, in particular of the direct injection type, presenting an improved way of keeping the smoke and HC emissions low, while at the same time presenting a good fuel-air mixture to the spark plug.

For an internal combustion engine of the above kind, this objective is solved in an inventive manner by the features of claim 1.

Accordingly, a well-atomized spray with a wide spray angle can be fully mixed with air as it moves toward the cavity tip part, and thus there is little emission of smoke and HC, and stratification can be achieved because the spray is transported by the slanted bottom surface of the cavity and collected in the tapering cavity tip part and then transferred to the spark plug.

The bottom surface of the recess is slanted up toward the tip part so that the spray moves along this slope and stratification can be achieved more readily.

According to a preferred embodiment, the vertical wall at the tip end of the cavity is formed perpendicularly or inclined forward from the perpendicular so that it opens out upward, and the radius of curvature of the R-shaped part between the bottom surface and the side wall is made smaller than the radius of curvature of the R-shaped part between the vertical wall and the bottom surface.

Thus, stratification can be readily achieved by enabling stagnation of spray to be prevented at the R-shaped part between the vertical wall and bottom surface, and lateral leakage of spray can be prevented since the radius of curvature of the R-shaped part between the bottom surface and side wall is small.

In a direct injection type internal combustion engine fitted with one or a number of pistons, the tip part of the spark plug is located above about half the height from the interface between cylinder block and cylinder head to the highest position in the combustion chamber, thereby exhibiting practical advantages in that the cooling properties of the spark plug can be assured and so-called carbonization can be repressed.

Further advantageous embodiments are laid down in the subclaims.

The invention will be described thereinafter in greater detail by means of an example of embodiment, as shown in the accompanying figures, wherein:
- Figure 1: is a longitudinal cross-section of an in-cylinder fuel-injected engine relating to an embodiment of this invention,
- Figure 2: is a longitudinal cross-section of an in-cylinder fuel-injected engine relating to the same embodiment at a different position to that in Figure 1,
- Figure 3: is a rear view of a cylinder head relating to the same embodiment,
- Figure 4: shows a piston relating to the same embodiment, where (a) is a plan view of the piston, (b) is a cross-section along line A-A in (a), and (c) is a cross-section along line B-B in (a),
- Figure 5: shows a piston relating to the same embodiment, where (a) is a plan view corresponding to Figure 4(a), and (b) is a cross-section corresponding to Figure 4(b),
- Figure 6: shows an example of a piston, where (a) is a plan view of the piston and (b) is a cross-section of the piston, (the shape of the piston top not being part of the invention),
- Figure 7: shows an example of a piston, where (a) is a plan view corresponding to Figure 6(a), and (b) is a cross-section corresponding to Figure 6(b), (the shape of the piston top not being part of the invention),
- Figure 8: shows another embodiment of the inventive direct injection type internal combustion engine with a modified cylinder head and an alternative embodiment of a spark plug,
- Figure 9: is a top view of a piston top as in Figure 8, wherein the position of the spark plug of Figure 8 is indicated,
- Figure 10: shows the situation of the air flow inside the combustion chamber at different crankshaft angles, and
- Figure 11: is a diagram showing crankcase angle relating to Figure 10.

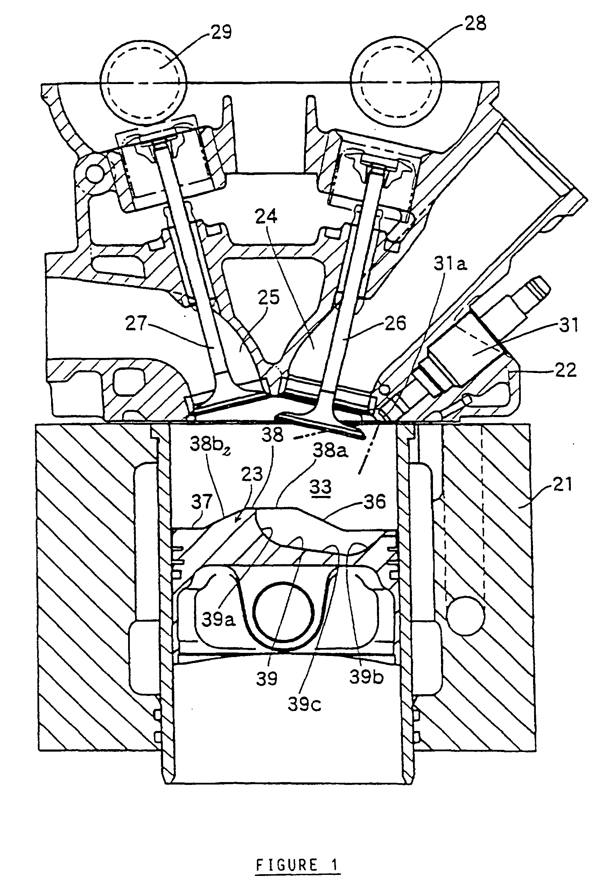

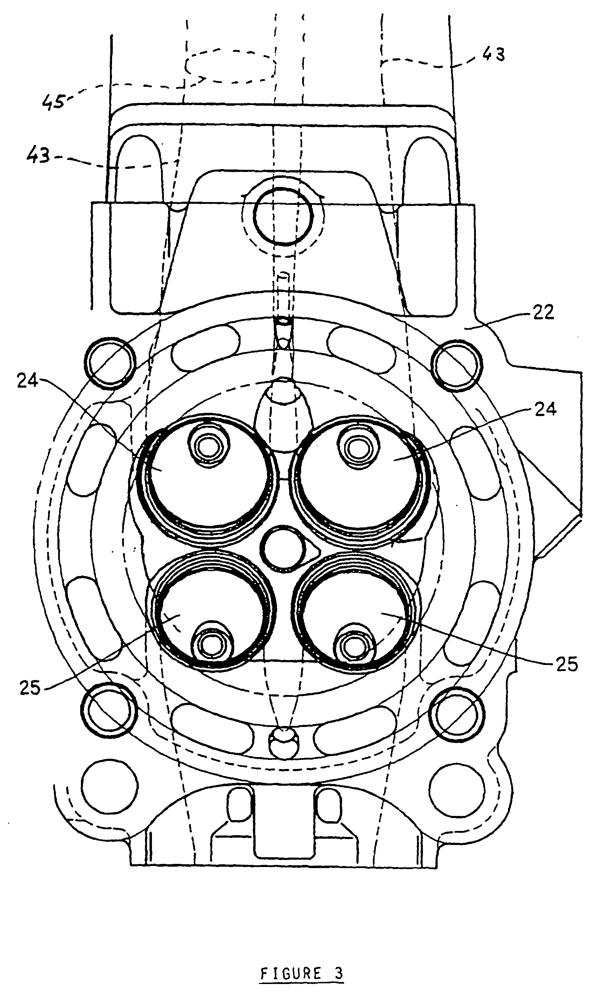

As shown in Figures 1 to 5, an inventive internal combustion engine comprises a cylinder head 22 fitted with one, two or three air intake valve(s) 26 and one or two exhaust valve(s) 27, each of which opens and closes an air intake port 24 or an exhaust port 25. The air intake valve(s) 26 and exhaust valve(s) 27 are opened and closed at prescribed timings by an air intake side cam shaft 28 and an exhaust side cam shaft 29.

A fuel injection nozzle 31 is located below or between the intake port(s) 24. In one of two intake ports 24 or in one of two intake channels 43 arranged before the intake ports a swirl control valve 45 for opening and fully or partly closing said intake port 24 or intake channel 43 is arranged.

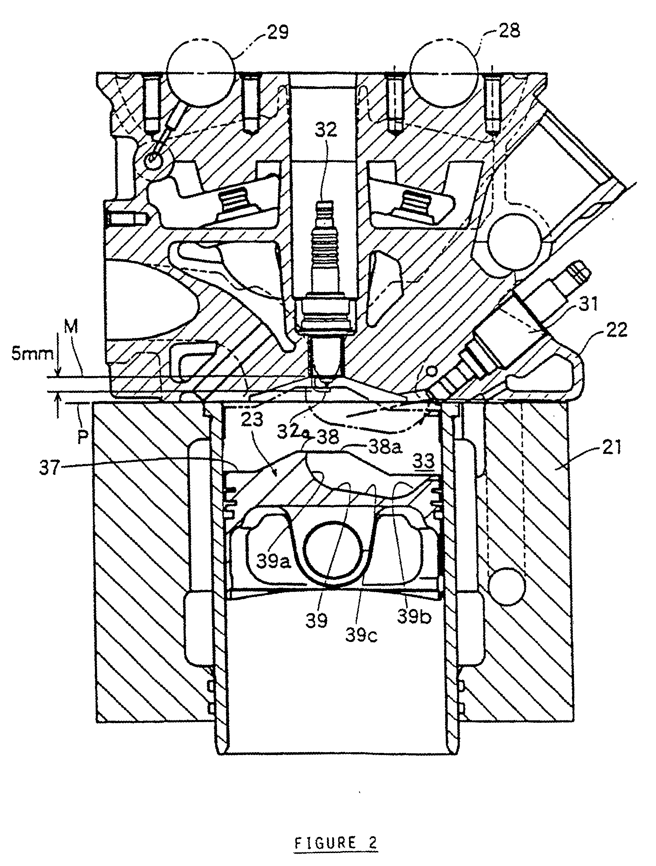

Furthermore, said cylinder head 22 is fitted with a fuel injection device 31 and a spark plug 32, and the injection outlet 31a of fuel injection device 31 and the tip 32a of spark plug 32 face toward a combustion chamber 33. This fuel injection device 31 is disposed diagonally near the bottom of air intake port 24, whereas spark plug 32 is disposed in the up/down direction at the highest position of combustion chamber 33 in the middle of combustion chamber 33 as seen in plan view. The position of tip 32a of this spark plug 32 is located higher than about half the height from the interface P between cylinder block 21 and cylinder head 22 to the highest position M of combustion chamber 33. In this embodiment, it projects 5 mm down from the highest position M in Figure 2.

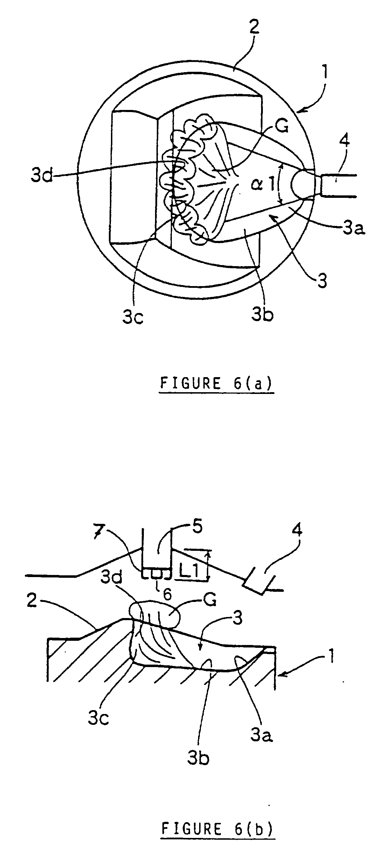

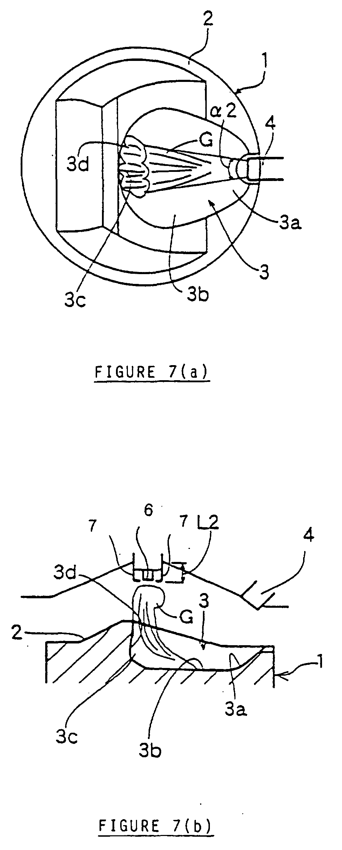

In one embodiment as shown in Figures 6 and 7, a piston 1 (not being part of the invention) is used in an in-cylinder fuel-injected engine where fuel is directly injected from a fuel injection device into a combustion chamber and combusted. A cavity 3, which is a recess, is formed at the top 2 of piston 1.

During the compression stroke of the in-cylinder fuel-injected engine, fuel is directly injected diagonally toward bottom surface 3b from the right end part in the figure (base end part 3a) of cavity 3 from fuel injection device 4. In this way, spray G is lifted up by the vertical wall part 3d at the tip part 3c of cavity 3, and this fuel is combusted by igniting it with spark plug 5.

In this way, by providing a cavity 3 and injecting the fuel into it, the miscibility with air can be improved, and the ignitability can be assured by lifting the spray up.

In the embodiment as shown in Figure 6 (the shape of the piston top not being part of the invention), smoke and HC emissions can be kept down by achieving a good air mixture when the injection angle α1 of spray G is large; however, spray G disperses at cavity tip part 3c so that stratification may not always be achieved, and the developed power may also become weak so there is insufficient transfer to spark plug 5, and there is thus no alternative but to increase the projection distance L1 of spark plug 5. In this case, when a uniform fuel-air mixture is supplied at full throttle, pre-ignition occurs due to the excessive temperature rise of spark plug 5.

On the other hand, as shown in Figure 7 (the shape of the piston not being part of the invention), when an attempt is made to achieve stratification with a spray G having a narrow injection angle α2, the transfer of spray G to spark plug 5 is adequate and the projection distance L2 of spark plug 5 can be kept down.

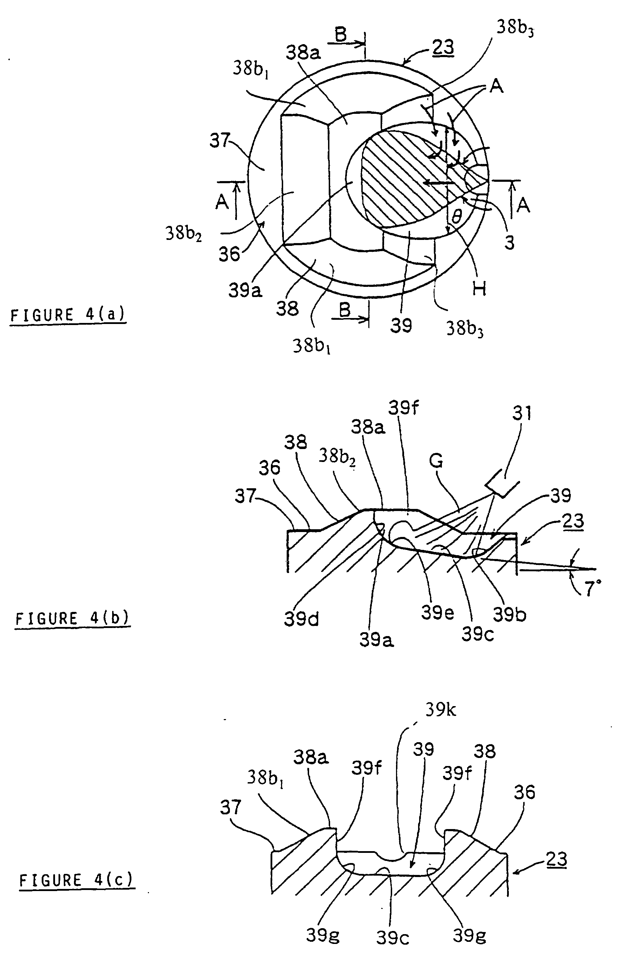

In another embodiment, as shown in Figure 4, the shape of the top part 36 of said piston 23 is formed as follows:

A planar part 37 is formed at the perimeter, and a projecting part 38 and a cavity 39, which is a recess, are formed so as to project upward inside this planar part 37.

This projecting part 38 is formed with a ceiling surface 38a, which is formed into a planar shape parallel to the planar part 37, and inclined surfaces 38b₁,38b₂,38b₃, which extend from the planar part 37 toward this ceiling surface 38a. Two of these inclined surfaces 38b₁ are portions of a common cone and arranged opposite to each other on two sides of an imaginary plane led vertically through a piston rod, connected to the piston. Two planar inclined surfaces 38b₂ and 38b₃ are arranged between these conical portions. The cavity intersects partially the planar surface 38a and one of the planar inclined surfaces 38b₃, building two independent parts of the surface 38b₃. The cavity 39 is parted from the inclined surfaces 38b₁, 38b₂ by the planar surface 38a.

Said cavity 39 presents an egg-shaped profile in plan view with the thinner tip part 39a of said egg-shaped profile disposed at the central part of the top surface of piston 23 (below spark plug 32), and the wider base end part 39b of said egg-shaped profile disposed in the vicinity of the injection outlet 31a of said fuel injection device 31. Furthermore, the bottom surface 39c of this cavity 39 is formed tilted up toward tip part 39a as shown in Figure 4(b), the angle here being set to 7°. Moreover, the radius of curvature R of R-shaped part 39e which extends to vertical wall 39d from bottom surface 39c at the side of tip 39a is here set to 13 mm.

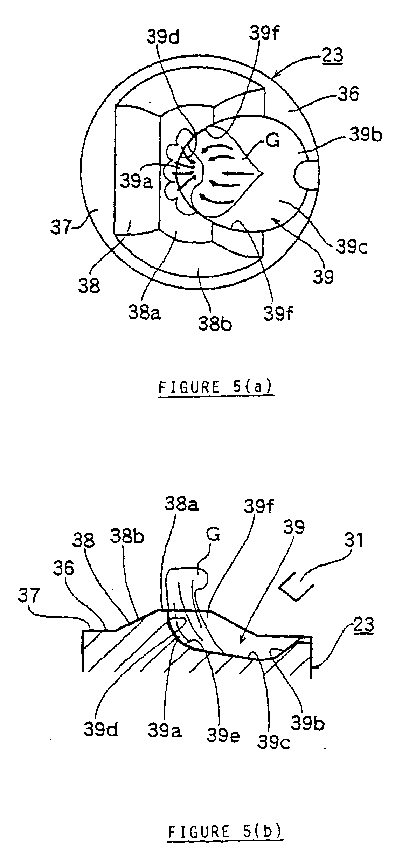

The outer contour or edge of the cavity 39 can the drawn as a continuous smoothly curved line which, in the vicinity of the tip part 39a, is completely free of any breaks or corners when viewed from the top, i.e. as shown in Figures 4(a) and 5(a).

A small recess 39k is formed at the edge of the front face of the piston at the base end of the cavity. It is a groove connecting the cavity (39) with a circumferential portion of the piston, with the ground of the groove above the bottom surface 39c. The groove intersects the planar surrounding part 37 of the piston. It may also be formed with a curved portion at its radially outer end terminating on the front face of the planar surrounding part 37 without intersecting the outer edge of the planar surrounding part 37, depending on the arrangement of the tip of a fuel injector protruding into the combustion chamber.

In addition, the relation between the angle of inclination of said cavity bottom surface 39c and the radius of curvature R of R-shaped part 39e should be such that the radius of curvature R is set to 15 mm to 30 mm when the angle of inclination is 0° - i.e. when it is not slanted - and the radius of curvature R is set to 8 mm to 15 mm when bottom surface 39c is slanted.

Also, as shown in Figure 4 (c), the R-shaped part 39 g between cavity bottom surface 39c and side wall 39f is here set to 8 mm to 10 mm, and is formed smaller than said R-shaped part 39e. Of course, they can also be made the same. In this case, both R-shaped parts 39 g and 39e can be successively formed with a single tool.

During the compression stroke of the engine, when piston 23 reaches the location shown by the solid line in Figure 2, fuel is injected from injection outlet 31a of fuel injection device 31 so that the injection angle θ in Figure 4 (a) is within the range from 60° to 80° so that the width H of base end part 39b side of cavity 39 is larger than the shape of this spray, and thus, as shown by arrow A in Figure 4 (a), air flows in toward the base end part 39b due to a swirl effect, and can easily mix with spray G; and the mixing of air is also promoted by the fact that the injection angle θ is made quite large as mentioned above.

This spray G then reaches the bottom surface 39c of cavity 39 and is guided toward tip part 39a by this bottom surface 39c and pushed against side wall 39f by the swirl flowing in from one side as mentioned above while being guided toward tip part 39a by this side wall 39f. Since this side wall 39f is higher than in the conventional case shown in Figure 6 (b) and since the R-shaped part 39g has a small radius of curvature R, lateral leakage of spray G can be prevented.

Subsequently, this spray G is guided by vertical wall 39d and R-shaped part 39e of cavity tip 39a, whereby spray G is lifted up. In this case, the lifting up of spray G can be facilitated by giving bottom surface 39c a sloping shape, and stagnation of spray G can be repressed accordingly by making R-shaped part 39e big.

As shown in Figure 5(a) and (b), stratification can then be achieved and transferred to spark plug 32 by narrowing and concentrating the front part of spray G with the thinner tip part 39a of the egg-shaped profile once it has been allowed to spread out.

In Figure 2, note that the position of piston 23 shown by the two-dot chain line is the top dead centre.

By fully mixing the fuel and air in this way, it is possible to repress smoke emissions while at the same time stabilizing the combustion due to the stratification and the favorable transport of fuel/air mixture to spark plug 32.

Moreover, since stratification is achieved, it is possible to maintain ignitability even if the distance by which spark plug 32 projects inside combustion chamber 33 is reduced, and thus heating of spark plug 32 can be suppressed. In particular, the cooling properties of spark plug 32 can be assured by positioning the tip part 32a of said spark plug 32 above about half the height from the interface between cylinder block 21 and cylinder head 22 to the highest position M in the combustion chamber. If the projection distance of spark plug 32 is big (around 11 mm), overheating is liable to occur and it is thus necessary to use a cooled plug; however, when such a plug is used, so-called carbonization can easily occur. But when the projection distance is small (around 5 mm) as in this embodiment, a normal plug can be used and carbonization can be repressed.

As shown in Fig. 2, a conventional spark plug 32 is used having an inner center electrode at its lower end (tip part 32a) positioned inside the cylinder and a second curved electrode located close to and below the first inner center electrode. Between these electrodes an ignition spark can be created for igniting the injected fuel or diesel.

Alternatively, a spark plug 5 as shown in Figs. 6b, 7b may be used in the inventive internal combustion engine.

This spark plug comprises a number of electrodes, preferably four electrodes of which one center electrode 6 is located in the center of the lower bottom surface of the spark plug 5 arranged inside the combustion chamber. The other electrode(s) are arranged as outer electrode(s) 7 symmetrically around said center electrode 6.

These outer electrodes 7 have preferably an L-shaped form, one end fixed to the bottom of the spark plug 5, the other end thereof being directed towards the center electrode 6 but, opposite to conventional spark plugs, all electrodes 6, 7 project at a same length from the bottom of the spark plug and the outer electrodes 7 do not reach over the center electrode 6, if seen in axial direction of the spark plug 5.

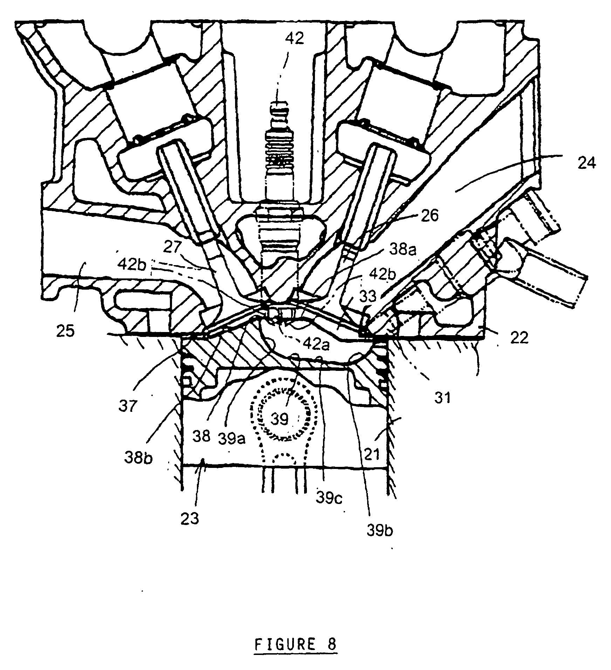

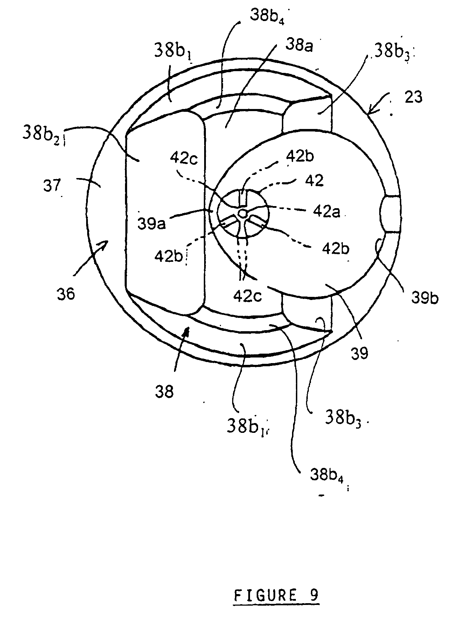

Another embodiment of an alternative embodiment of a spark plug 42 is shown in Figs. 8 and 9, which show similar embodiments of a cylinder head 22 and a piston 23 of an inventive combustion engine as presented by Figs. 1 and 4a.

This spark plug 42 works like the spark plug 5 described above having a similar construction. Around a center electrode 42a (corresponding to electrode 6), a number of outer electrodes 42b, preferably three outer electrodes 42b (corresponding to electrodes 7) are arranged symmetrically to the center electrode 42a.

While it has a preferably cylindrical form, the outer electrodes 42b are formed basically L-shaped like the electrodes 7, having preferably also a cylindrical cross-section, but including an angle between their arms which is greater than 90°, preferably 135°.

Also the outer electrodes 42b may project slightly further (preferably 1 to 2 mm) from the lower surface of the spark plug 42, where they are arranged at, than the center electrode 42a. Ignition sparks can inflame between the center electrode 42a and the distal ends 42c of the outer electrodes 42b.

If seen from the side, as in Fig. 8, the electrodes may reach slightly into the cavity 39 formed in the piston top surface 36.

In Fig. 9 the piston top 36 is formed almost as described before when referring to Fig. 4, the single elements thereof having the same function and reference numerals.

The inclined surfaces 38 differ in so far as in the embodiment shown in Fig. 9 two additional inclined surfaces 38b₄ are formed between the surfaces 38b₁ and 38a, also contacting the surfaces 38b₂ and 38b₃.

As further shown in Fig. 8, since the spark plug 42 only reaches slightly into the combustion chamber 33, it is addicted to only little combustion heat, as described when referring to Fig. 7b.

Due to this design of the spark plugs 7, 42 and the combustion chamber 33, one or a number of ignition sparks can inflame the fuel air mixture inside the combustion chamber directly, without being shielded to the piston top side by the outer electrode(s) at the beginning of and during the combustion.

Since an ignition spark does not have to burn around an (outer) electrode ignition, speed is increased, the combustion characteristics are improved and the lifetime of the spark plug is prolongated.

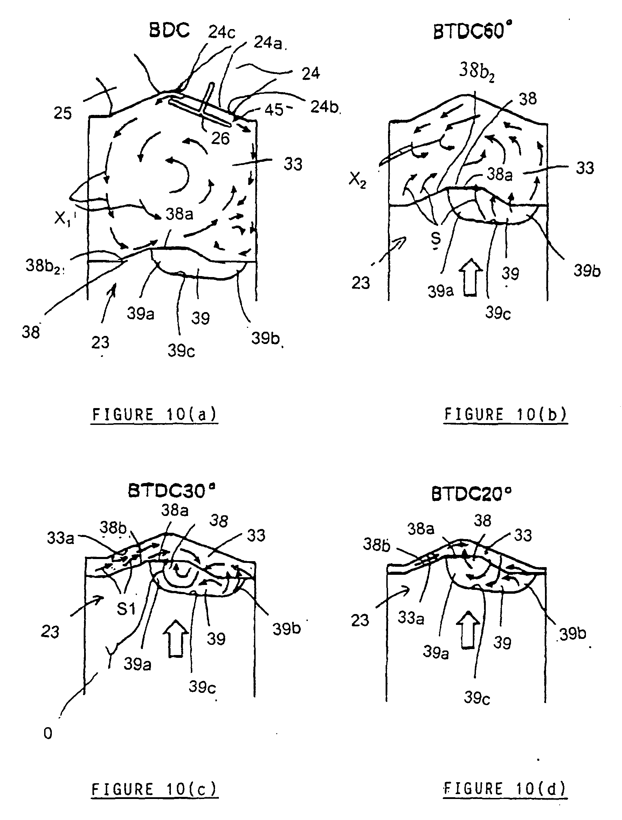

Fig. 10 describes the air-fuel (diesel) mixture flow inside the combustion chamber 33 of an inventive internal combustion engine of the direct injection type during an intake cycle within a crankcase angle ranging from BTC to TDC.

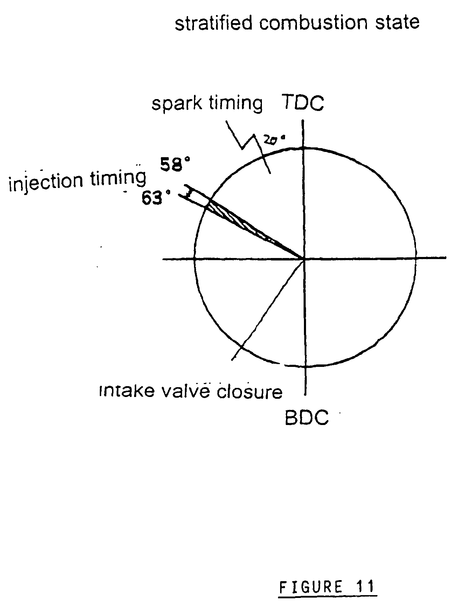

Fig. 10a shows the situation inside a cylinder of this engine when the piston is at its bottom dead center and fresh air has been drawn into the combustion chamber 33 through one or two open intake valves 26 through the intake port 24, resulting in a complex swirl X. The intake valves 26 are closed at about 30° crankshaft angle after bottom dead center, as shown in Fig. 11.

When the piston 23 moves back up, a shown in Fig. 10b, at a crankshaft angle at 60° before top dead center, the fresh air swirl X₂ changes as shown, folding in from the outlet 25 side of the combustion chamber 33 to its center in about equal distance from the top of the combustion chamber and the piston top 36, wherein a remaining upper part of the swirl X₂ is almost symmetrically opposed by a counter swirl S reflected from the piston top 36.

Fig. 10c shows the situation at a crankshaft angle of about (see Fig. 11) 30° before top dead center, about then when the injection of fuel (diesel) into the combustion chamber takes place. Side swirls S₁ and center swirl Y lead the fuel-air mixture towards the upper center of the combustion chamber, where the spark plug is located, for it to inflame the mixture at a crankshaft angle of 20°, as shown in Fig. 10d and Fig. 11.

## Claims

1. An internal combustion engine, in particular a direct injection type internal combustion engine comprising:
a piston (23) with a cavity (39) formed at the top thereof,
a fuel injection valve (31) for injecting fuel into said cavity (39), and
a spark plug (32) arranged above said cavity (39) in top dead center position of said piston (23), wherein said cavity (39) is shaped to guide fuel injected by said fuel injection valve (31) toward an ignition area of said spark plug (32), and wherein said cavity (39) has an egg-shaped profile in plan view, **characterized in that** a narrower pointed end (39a) of said egg-shaped profile is disposed at a central portion of the upper face of the piston (23), and
wherein a wider base end (39b) of said egg-shaped profile is disposed in the vicinity of an edge portion of the upper face of the piston (23), whereby fuel can be injected from said base end (39b) toward said pointed end (39a), and **in that** a bottom surface (39c) of said cavity (39) is slanted so that the pointed end (39a) is higher than the base end (39b).

2. Internal combustion engine according to claim 1, **characterized in that** the shape of said cavity (39) is adapted to guide injected fuel to said ignition area in a substantially vertically ascending manner.

3. Internal combustion engine according to claim 1 or 2, **characterized in that** a central wall (39d) at the pointed end (39a) of said cavity (39) opens out either axially or along a direction inclined forward from the longitudinal axis of the piston, and wherein the radius of curvature of a portion (39g) between said bottom surface (39c) and a side wall (39f) of the cavity is made smaller than the radius of curvature of another portion (39e) between said central wall (39d) of said bottom surface (39c).

4. internal combustion engine according to one of claims 1 to 3, **characterized in that** the top of the piston (23) comprises a projecting part (38), and that said cavity (39) intersects said projecting part (38).

5. Internal combustion engine according to claim 4, **characterized in that** the projecting part (38) on the front face of the piston (23) is surrounded by a planar part (37) so as to project inside this planar part (37).

6. Internal combustion engine according to claim 4 or 5, **characterized in that** the projecting part (38) is formed with a planar surface (38a) at its top and with inclined surfaces (38b₁,38b₂,38b₃,38b₄) extending toward the said planar surface (38a).

7. Internal combustion engine according to claim 6, **characterized in that** the cavity (39) intersects said planar surface (38a) and one of said inclined surfaces (38b₃).

8. Internal combustion engine according to one of claims 4 to 7, **characterized in that** the projecting part (38) comprises two oppositely arranged conical inclined surfaces (38b₁) and two oppositely arranged planar inclined surfaces (38b₂,38b₃) arranged between the conical inclined surfaces, respectively.

9. Internal combustion engine according to one of claims 1 to 8, **characterized in that** a recess (39k) is formed at the edge of the front face of the piston (23) at the base end (39b) of said cavity (39) and intersecting the outer contour of said cavity (39) in plan view.

10. Internal combustion engine according to one of the claims 1 to 9, **characterized by** comprising a cylinder head (22) attached to a cylinder block (21) wherein a spark plug (5,42) is fitted in said cylinder head (22) comprising ignition electrodes (6,7,42a,42b) defining at least one ignition gap (42c) which is unshieldedly accessible by an ascending air/fuel mixture, said ignition electrodes (6,7,42a,42b) substantially remaining outside said cavity (39) when the piston (23) assumes its top dead center position.

11. Internal combustion engine according to claim 10, **characterized in that** said spark plug (5,42) comprises a center electrode (6,42a) and a number of, preferably three, further electrodes (7,42b) located beside the center electrode (6,42a), the distal ends of the electrodes (6,7,42a,42b) having the same distance to the bottom surface of the spark plug (5,42).

12. Internal combustion engine according to claim 11, **characterized in that** the center electrode (6,42a) is not overlapped by any one of the further electrodes (7,42b), if seen in axial direction of the spark plug (5,42), while it may be slightly surpassed by them if seen from the side.

13. Internal combustion engine according to one of claims 11 or 12, **characterized in that** the center electrode (6,42a) has a cylindrical shape, the outer electrodes (7,42b) have a L-formed shape, enclosing an angle of 90° - 150° between their arms, and are arranged symmetrically around said center electrode (6,42a).

## Patentansprüche

1. Brennkraftmaschine, insbesondere eine Brennkraftmaschine vom Direkteinspritzungstyp, die aufweist:
einen Kolben (23) mit einem an der Oberseite desselben gebildeten Hohlraums (39), einem Kraftstoff- Einspritzventil (31) zum Einspritzen von Kraftstoff in den Hohlraum (39), und
eine Zündkerze (32), angeordnet oberhalb des Hohlraumes (39) in der oberen Totpunktposition des Kolbens (23), wobei der Hohlraum (39) geformt ist, um den durch das Kraftstoff- Einspritzventil (31) eingespritzten Kraftstoff in die Richtung zu dem Zündbereich der Zündkerze (32) zu führen,
und wobei der Hohlraum (39) in einer Draufsicht einförmiges Profil hat,
**dadurch gekennzeichnet, dass** ein verengtes Ende (39a) des eiförmigen Profiles an einem Mittelabschnitt der oberen Fläche des Kolbens (23) angeordnet ist und wobei eine breiteres Basisende (39b) des einförmigen Profiles in der Nähe eines Kantenabschnittes der oberen Fläche des Kolbens (23) angeordnet ist, wodurch Kraftstoff von dem Basisende (39b) in die Richtung zu dem verengten Ende (39a) eingespritzt werden kann, und dadurch, dass eine Bodenoberfläche (39c) des Hohlraumes (39) geneigt ist, so dass das verengte Ende (39a) höher als das Basisende (39c) ist.

2. Brennkraftmaschine nach Anspruch 1, **dadurch gekennzeichnet, dass** die Form des Hohlraumes (39) vorgesehen ist, den eingespritzten Kraftstoff in den Zündbereich in einer im Wesentlichen vertikal aufsteigenden Weise zu führen.

3. Brennkraftmaschine nach Anspruch 1 oder 2, **dadurch gekennzeichnet, dass** eine Mittelwand (39d) an dem verengten Ende (39a) des Hohlraums (39) sich jeweils axial oder entlang einer von der axialen Achse des Kolbens nach vorn geneigten Achse öffnet, und wobei der Krümmungsradius eines Abschnittes (39g) zwischen der Bodenfläche (39c) und der Seitenwand (39f) des Hohlraumes kleiner gemacht ist als der Krümmungsradius eines weiteren Abschnittes (39e) zwischen der Mittelwand (39d) und der Bodenoberfläche (39c).

4. Brennkraftmaschine nach einem der Ansprüche 1 bis 3, **dadurch gekennzeichnet, dass** die Oberseite des Kolbens (23) einen vorspringenden Teil (38) aufweist, und dass der Hohlraum (39) den vorspringenden Teil (38) schneidet.

5. Brennkraftmaschine nach Anspruch 4, **dadurch gekennzeichnet, dass** der vorspringende Teil (38) an der Vorderseite des Kolbens (23) durch ein ebenes Teil (37) umgeben ist, so dass es innerhalb dieses ebenen Teiles (379 vorspringt.

6. Brennkraftmaschine nach Anspruch 4 oder 5, **dadurch gekennzeichnet, dass** der vorspringende Teil (38) mit einer ebenen Oberfläche (38a) an seiner Spitze und geneigten Oberflächen (38b₁, 38b₂, 38b₃, 38b₄) gebildet ist, die sich in die Richtung zu der ebenen Oberfläche (38a) erstrecken.

7. Brennkraftmaschine nach Anspruch 6, **dadurch gekennzeichnet, dass** der Hohlraum (39) die ebene Oberfläche (38a) und eine der geneigten Oberflächen (38b₃) schneidet.

8. Brennkraftmaschine nach einem der Ansprüche 4 bis 7, **dadurch gekennzeichnet, dass** der vorspringende Teil (38) zwei gegenüberliegende konisch geneigte Oberflächen (38b₁) und jeweils zwei gegenüberliegend angeordnete ebene, geneigte Oberflächen (38b₂, 38b₃), angeordnet zwischen den konische geneigten Oberflächen aufweist.

9. Brennkraftmaschine nach einem der Ansprüche 1 bis 8, **dadurch gekennzeichnet, dass** eine Aussparung (39k) an der Kante der Vorderfläche des Kolbens (23) an dem Basisende (39b) des Hohlraumes (39) gebildet ist und den äußeren Umriss des Hohlraumes (39) in der Draufsicht schneidet.

10. Brennkraftmaschine nach einem der Ansprüche 1 bis 9, **gekennzeichnet durch** aufweisend einen mit einem Zylinderblock (21) verbundenen Zylinderkopf (22), wobei eine Zündkerze (5, 42) in den Zylinderkopf (22) eingesetzt ist, mit Zündelektroden (6, 7, 42a, 42b) eingesetzt ist, die zumindest einen Zündspalt (42c) bildet, der nicht abgedeckt einem aufsteigendes Luft- / Kraftstoffgemisch zugänglich ist, wobei die Zündelektroden (6, 7, 42a, 42b) im Wesentlichen außerhalb des Hohlraumes (39) verbleiben, wenn der Kolben (23) seine obere Totpunktposition einnimmt.

11. Brennkraftmaschine nach Anspruch 10, **dadurch gekennzeichnet, dass** die Zündkerze (5, 42) eine Mittelelektrode (6, 42a) und eine Anzahl von, vorzugsweise drei, weiteren Elektroden (7,42b), angeordnet neben den der Mittelelektrode (6, 42a), aufweist, wobei die vorauslaufenden Enden der Elektroden (6, 7, 42a, 42b) denselben Abstand zu der Bodenoberfläche der Zündkerze (5, 42) haben.

12. Brennkraftmaschine nach Anspruch 11, **dadurch gekennzeichnet, dass** die Mittelelektrode (6, 42a) nicht durch irgendeine der anderen Elektroden (7, 42b) überlagert wird, wenn in axialer Richtung der Zündkerze (5, 42) gesehen, während sie leicht durch sie übertroffen werden kann, wenn von der Seite gesehen.

13. Brennkraftmaschine nach einem der Ansprüche 11 oder 12, **dadurch gekennzeichnet, dass** die Mittelelektrode (6, 42a) eine zylindrische Form hat, die Außenelektroden (7, 42b) eine L- Form haben, die einen Winkel von 90° - 150° zwischen ihren Armen einschließen, und rund um die Mittelelektrode (6, 42a) symmetrisch angeordnet sind.

## Revendications

1. Moteur à combustion interne, en particulier moteur à combustion interne à injection directe comprenant :
un piston (23) avec une cavité (39) formée au niveau de la partie supérieure de celui-ci,
une soupape d'injection de carburant (31) destinée à injecter du carburant dans ladite cavité (39), et
une bougie d'allumage (32) agencée au-dessus de ladite cavité (39) dans la position de point mort haut dudit piston (23), dans lequel ladite cavité (39) est formée pour guider le carburant injecté par ladite soupape d'injection de carburant (31) vers une zone d'allumage de ladite bougie d'allumage (32), et dans lequel ladite cavité (39) a un profil ovoïde en vue en plan, **caractérisé en ce qu'**une extrémité pointue plus étroite (39a) dudit profil ovoïde est disposée au niveau d'une partie centrale de la face supérieure du piston (23), et dans lequel une extrémité de base plus large (39b) dudit profil ovoïde est disposée dans le voisinage d'une partie de bord de la face supérieure du piston (23), moyennant quoi le carburant peut être injecté à partir de ladite extrémité de base (39b) vers ladite extrémité pointue (39a), et **en ce qu'**une surface inférieure (39c) de ladite cavité (39) est inclinée de sorte que l'extrémité pointue (39a) est plus élevée que l'extrémité de base (39b).

2. Moteur à combustion interne selon la revendication 1, **caractérisé en ce que** la forme de ladite cavité (39) est adaptée pour guider le carburant injecté jusqu'à ladite zone d'allumage de manière ascendante sensiblement verticalement.

3. Moteur à combustion interne selon la revendication 1 ou 2, **caractérisé en ce qu'**une paroi centrale (39d) au niveau de l'extrémité pointue (39a) de ladite cavité (39) s'étendant soit de façon axiale soit le long d'une direction inclinée vers l'avant à partir de l'axe longitudinal du piston, et dans lequel le rayon de courbure d'une partie (39g) entre ladite surface inférieure (39c) et une paroi latérale (39f) de la cavité est réalisé plus petit que le rayon de courbure d'une autre partie (39e) entre ladite paroi centrale (39d) de ladite surface inférieure (39c).

4. Moteur à combustion interne selon l'une des revendications 1 à 3, **caractérisé en ce que** la partie supérieure du piston (23) comprend une partie en saillie (38), et que ladite cavité (39) coupe ladite partie en saillie (38).

5. Moteur à combustion interne selon la revendication 4, **caractérisé en ce que** la partie en saillie (38) sur la face avant du piston (23) est entourée par une partie plane (37) afin de faire saillie à l'intérieur de cette partie plane (37).

6. Moteur à combustion interne selon la revendication 4 ou 5, **caractérisé en ce que** la partie en saillie (38) présente une surface plane (38a) au niveau de sa partie supérieure et avec des surfaces inclinées (38b₁, 38b₂, 38b₃, 38b₄) s'étendant vers ladite surface plane (38a).

7. Moteur à combustion interne selon la revendication 6, **caractérisé en ce que** la cavité (39) croise ladite surface plane (38a) et une desdites surfaces inclinées (38b₃).

8. Moteur à combustion interne selon l'une des revendications 4 à 7, **caractérisé en ce que** la partie en saillie (38) comprend deux surfaces inclinées coniques agencées de façon opposée (38b₁) et deux surfaces inclinées planes agencées de façon opposée (38b₂, 38b₃) agencées entre les surfaces inclinées coniques, respectivement.

9. Moteur à combustion interne selon l'une des revendications 1 à 8, **caractérisé en ce qu'**un évidement (39k) est formé au niveau du bord de la face avant du piston (23) au niveau de l'extrémité de base (39b) de ladite cavité (39) et croise le profil extérieur de ladite cavité (39) en vue en plan.

10. Moteur à combustion interne selon l'une des revendications 1 à 9, **caractérisé en ce qu'**il comprend une culasse de cylindre (22) fixée à un bloc cylindres (21), dans lequel une bougie d'allumage (5, 42) est installée dans ladite culasse de cylindre (22) comprenant des électrodes d'allumage (6, 7, 42a, 42b) définissant au moins un espace d'allumage (42c) qui est accessible de façon non protégée à un mélange d'air/carburant ascendant, lesdits électrodes d'allumage (6, 7, 42a, 42b) restant sensiblement à l'extérieur de ladite cavité (39) lorsque le piston (23) prend sa position de point mort haut.

11. Moteur à combustion interne selon la revendication 10, **caractérisé en ce que** ladite bougie d'allumage (5, 42) comprend une électrode centrale (8, 42a) et un nombre, de préférence trois, d'électrodes supplémentaires (7, 42b) situés à côté de l'électrode central (6, 42a), les extrémités distales des électrodes (6, 7, 42a, 42b) ayant la même distance jusqu'à la surface inférieure de la bougie d'allumage (5, 42).

12. Moteur à combustion interne selon la revendication 11, **caractérisé en ce que** l'électrode central (6, 42a) n'est pas recouvert par l'une quelconque des électrodes supplémentaires (7, 42b), si elle est vue dans la direction axiale de la bougie d'allumage (5, 42), alors qu'elle peut être légèrement dépassée par elles si elle est vue de côté.

13. Moteur à combustion interne selon l'une des revendications 11 ou 12, **caractérisé en ce que** l'électrode centrale (6, 42a) a une forme cylindrique, les électrodes extérieures (7, 42b) ont une forme de L, englobant un angle de 90° à 150° entre leurs bras, et sont agencés symétriquement autour de l'électrode centrale (6, 42a).
